# EUROPÄISCHE PATENTSCHRIFT

(11) **EP 0 648 532 B1**
(45) Veröffentlichungstag und Bekanntmachung des Hinweises auf die Patenterteilung: **06.05.1999**
(21) Anmeldenummer: 94115714.1
(22) Anmeldetag: 06.10.1994
(51) Int. Cl.: B01J 20/06, B01J 20/10

(54) **Adsorptive Trocknung neutraler Gase**
Adsorptive drying of neutral gases
Dessication des gaz neutres par adsorption

(30) Priorität: 14.10.1993 DE 4335027; 11.07.1994 DE 4424329
(43) Veröffentlichungstag der Anmeldung: 19.04.1995
(73) Patentinhaber: Engelhard Process Chemicals GmbH, 31582 Nienburg / Weser (DE)
(72) Erfinder: Fuhrmann, Kirsten, D-30419 Hannover (DE); Wischnat, Alf-Eric, D-31275 Lehrte (DE); Schulz, Thomas, Dr., D-31812 Bad Pyrmont (DE); Hoffmeister, Michael, Dr., D-30173 Hannover (DE)
(74) Vertreter: Bezold, Gunter, Dr.

(56) Entgegenhaltungen:
- EP-A- 0 457 613
- US-A- 3 246 758
- US-A- 4 177 048
- PATENT ABSTRACTS OF JAPAN vol. 8, no. 168 (C-236) 3. August 1984 & JP-A-59 066 324 (NIHON PAIONIKUSU) 14. April 1984
- DATABASE WPI Week 9227, Derwent Publications Ltd., London, GB; AN 92-222656 & JP-A-4 146 994 (TAIHO KOGYO CO)
- DATABASE WPI Week 8703, Derwent Publications Ltd., London, GB; AN 87-017634 & JP-A-61 274 743 (SUNSTAR)
- DATABASE WPI Week 8146, Derwent Publications Ltd., London, GB; AN 81-84160D & JP-A-56 124 049 (NIPPON LIGHT METAL)
- PATENT ABSTRACTS OF JAPAN vol. 13, no. 336 (C-623) 27. Juli 1989 & JP-A-01 115 433 (MIDORI TOYODA) 8. Mai 1989
- DATABASE WPI Week 7540, Derwent Publications Ltd., London, GB; AN 75-66629W & JP-A-50 027 846 (KOBAYASHI)
- DATABASE WPI Week 8701, Derwent Publications Ltd., London, GB; AN 87-003928 & JP-A-61 264 257 (SEKISUI CHEM IND)
- DATABASE WPI Week 7320, Derwent Publications Ltd., London, GB; AN 73-27969U & SU-A-353 195 (MINE RESCUE RES INST)

## Beschreibung

Die vorliegende Erfindung betrifft ein Verfahren zur adsorptiven Trocknung neutraler Gase.

Es ist bekannt, zur Trocknung von Gasen partikelförmige Adsorbenzien auf der Basis anorganischer Oxide, z.B. aus Siliciumdioxid, Aluminiumoxid oder Alumosilikat, einzusetzen. Neben einem hohen Adsorptionsvermögen für Wasserdampf sollten die Trockenmittel sich leicht wieder regenerieren lassen. Zur besseren Kontrolle des Trocknungsvorganges ist es dabei wünschenswert, wenn durch eine reversible Verfärbung der Adsorbenzien deren fortschreitende Wasseraufnahme angezeigt wird.

Die JP-A-4-146994 beschreibt ein Verfahren zum Entfernen von Feuchtigkeit aus leichtem Heizöl unter Verwendung von Adsorbenzien, die einen pH-Indikator enthalten.

Die JP-A-61-274743 beschreibt die Verwendung von mit nichtflüchtigen Säuren und Indikator-Farbstoffen imprägnierten Adsorbenzien für die Adsorption basischer Gase, insbesondere für die Adsorption von Ammoniak und Aminen.

Die JP-A-56-124049 beschreibt ein Gemisch aus Calciumoxid und Phenolphthalein, das zur Bestimmung des Feuchtigkeitsgehaltes von pulverförmigen oder feinkörnigen Materialien, wie z.B. gebranntem Aluminiumoxid, verwendet werden kann.

Aufgabe der vorliegenden Erfindung ist es, ein verbessertes Verfahren zur adsorptiven Trocknung neutraler Gase bereitzustellen, bei dem Adsorbenzien verwendet werden, die den Grad ihrer Wasseraufnahme anzeigen Diese Aufgabe wird mit einem Verfahren zur adsorptiven Trocknung neutraler Gase gelöst, das dadurch gekennzeichnet ist, daß man die neutralen Gase mit partikelförmigen Adsorbenzien in Kontakt bringt, wobei die partikelförmigen Adsorbenzien mit einem Indikator-Farbstoff aus der Gruppe Phenolphthalein, Kresolrot und Thymolblau imprägnierte Formkörper auf der Basis anorganischer Oxide sind.

Es ist bevorzugt, daß die Adsorbenzien imprägnierte Formkörper auf der Basis anorganischer Oxide aus der Gruppe Siliciumdioxid, Aluminiumoxid, Alumosilikat, Magnesiumoxid, Titandioxid, Zirkoniumoxid oder Hafniumoxid oder Gemische davon sind.

Es ist weiterhin bevorzugt, daß die imprägnierten Adsorbenzien bei Kontakt mit Wasser oder Wasserdampf einen reversiblen Farbumschlag zeigen.

Die Erfindung betrifft ebenfalls die Verwendung von partikelförmigen Adsorbenzien aus mit einem Indikator-Farbstoff aus der Gruppe Phenolphthalein, Kresolrot und Thymolblau imprägnierten Formkörpern auf der Basis anorganischer Oxide zur adsorptiven Trocknung neutraler Gase.

Im Sinne der Erfindung werden unter Adsorbenzien auf der Basis anorganischer Oxide Adsorbenzien aus amorphem und/oder kristallinem Silciumdioxid, Aluminiumoxid, Alumosilikat, Magnesiumoxid, Zinkoxid, Titandioxid, Zirkoniumoxid oder Hafniumoxid verstanden. Neben den eigentlichen oxidischen Komponenten können dabei noch weitere, die anwendungstechnischen Eigenschaften verändernde Zusätze, wie z.B. Füllstoffe wie Schichtsilikate, Zeolithe oder Aerosil, oder Porenbildner, wie z.B. Holzmehl oder Stärke, enthalten sein. Neben den reinen Oxiden sollen unter dem Begriff anorganische Oxide auch Mischoxide, insbesondere binäre oder tertiäre Mischoxide, deren einer Bestandteil Siliciumoxid ist, verstanden werden. Besonders bevorzugt sind Adsorbenzien auf der Basis von Siliciumdioxid und/oder Aluminiumoxid oder Alumosilikat, insbesondere Siliciumdioxid.

Die erfindungsgemäß verwendeten Adsorbenzien können als beliebige partikelförmige Formkörper, z.B. als Pulver, Granulat, Strangpresslinge oder perlförmige Formkörper, vorliegen. Zweckmäßigerweise liegen sie als Partikel in einer Größe von mindestens 0,1 mm vor. Besonders bevorzugt sind die erfindungsgemäß verwendeten Adsorbenzien perlförmige Formkörper mit einer durchschnittlichen Korngröße im Bereich von 0,1 bis 6 mm, insbesondere 0,5 bis 5 mm.

Die erfindungsgemäß verwendeten Adsorbenzien sind mit einem Indikator-Farbstoff aus der Gruppe Phenolphthalein, Kresolrot und Thymolblau imprägniert. Hierdurch erhalten die erfindungsgemäß verwendeten Adsorbenzien die Eigenschaft, bei Kontakt mit geringen Mengen an Wasser oder Wasserdampf reversibel mit einem Farbumschlag zu reagieren. Aufgrund dieser Eigenschaft eignen sich diese Adsorbenzien zur adsorptiven Trocknung feuchter Gase. Mit Phenolphthalein imprägnierte Adsorbenzien zeigen dabei einen Farbumschlag von orange nach farblos bzw. orange nach violett, mit Kresolrot imprägnierte Adsorbenzien einen Farbumschlag von orange nach farblos und mit Thymolblau imprägnierte Adsorbenzien einen Farbumschlag von orange nach blau. Je nach Indikator-Farbstoff bzw. Farbstoffgehalt wird dabei der Farbumschlag der Teilchen bei einer relativen Feuchtigkeit des zu trocknenden Gases zwischen 10 und 50% deutlich sichtbar. Den mit Wasser beladenen verfärbten Adsorbenzien kann durch Erhitzen auf Temperaturen im Bereich von 80 bis 200 °C das adsorbierte Wasser wieder entzogen werden, wobei sie regeneriert werden und wieder ihre ursprüngliche Farbe annehmen. Die erfindungsgemäß verwendeten Adsorbenzien können hergestellt werden, indem man Formkörper auf der Basis anorganischer Oxide mit einer Lösung, enthaltend einen Indikator-Farbstoff aus der Gruppe Phenolphthalein, Kresolrot und Thymolblau, imprägniert und anschließend trocknet.

Im erfindungsgemäßen Verfahren können kristalline oder amorphe Formkörper auf der Basis von Siliciumdioxid, Aluminiumoxid, Alumosilikat, Magnesiumoxid, Zinkoxid, Titandioxid, Zirkoniumoxid oder Hafniumoxid, vorzugsweise auf der Basis von Alumosilikat, Siliciumdioxid und/oder Aluminiumoxid, eingesetzt werden. Die Herstellung derartiger Formkörper ist dem Fachmann allgemein bekannt. Kristallines Alumosilikat beispielsweise kann analog dem Verfahren der DE-AS 1 038 015 hergestellt werden. Dabei werden eine Natriumaluminat-Lösung und eine Natriumsilikat-Lösung unter Gel-Bildung miteinander vermischt und zur Kristallisation gebracht. Die Herstellung amorpher Alumosilikate kann beispielsweise analog dem in der DE-OS 2 917 313 beschriebenen Verfahren erfolgen. Dabei werden eine Aluminat- und eine Silikat-Lösung miteinander vereinigt. Wenn das Gemisch sofort in ein Fällöl gegeben wird, bilden sich perlförmige Körper aus amorphen Alumosilikat.

Im erfindungsgemäßen Verfahren können die Formkörper auf Basis anorganischer Oxide in beliebiger Form, z. B. als Granulat, Strangpresslinge oder als Perlen, eingesetzt werden. Zweckmäßigerweise sollten die Partikel eine Größe von mindestens 0,1 mm aufweisen. Besonders bevorzugt werden im erfindungsgemäßen Verfahren perlförmige Formkörper eingesetzt, deren durchschnittliche Korngröße im Bereich von 0,1 bis 6 mm, insbesondere 0,5 bis 5 mm liegt. Es können aber auch andersgeformte Formkörper eingesetzt werden.

Bevorzugt werden im erfindungsgemäßen Verfahren Formkörper auf der Basis von Alumosilikat oder Siliciumdioxid und/oder Aluminiumoxid eingesetzt. Besonders bevorzugt werden im erfindungsgemäßen Verfahren farblose Formkörper verwendet, was insbesondere für die spätere Erkennung des Farbumschlages der Adsorbenzien von Vorteil ist. Derartige farblose Formkörper können z.B. erhalten werden, indem man den an sich bekannten Herstellvorgang der Formkörper so steuert, daß Verfärbungen und Trübungen der Formkörper, z.B. durch kohlenstoffhaltige Reste aus zugesetzten Füllstoffen oder dem verwendeten Formöl, weitgehend vermieden werden. Alternativ können die Formkörper gegebenenfalls nach ihrer Herstellung einer Bleichbehandlung, z.B. einer Behandlung mit Ozon-Gas, unterzogen werden. Eine Ozonbehandlung der Formkörper kann z.B. auf an sich bekannte Weise durchgeführt werden, indem man die Formkörper in einen Vorlagebehälter füllt und anschließend Ozon-Gas durch diesen Vorlagebehälter bis zur erkennbaren Ausbleichung der Formkörper leitet. Auch sind derartig ozonisierte Formkörper allgemein kommerziell erhältlich, z.B. unter dem Handelsnamen "KC-Trockenperlen Typ N^{R} ozonisiert ".

Die den Indikator-Farbstoff enthaltende Lösung, mit der die Formkörper imprägniert werden, kann eine wäßrige Lösung oder eine Lösung sein, welche den Indikator-Farbstoff in einem polaren organischen Lösungsmittel, wie z.B. Aceton oder einem niederen Alkohol wie Methanol oder Ethanol, gelöst enthält. Die Konzentration des Indikator-Farbstoffes in der Lösung kann dabei im Bereich von 0,01 bis 10 Gew.-%, vorzugsweise 0,01 bis 2 Gew.-%, liegen. Bevorzugt verwendet man eine wäßrige Lösung. Hierbei ist es besonders vorteilhaft, wenn man eine den Indikator-Farbstoff enthaltende wäßrige Lösung einsetzt, welche durch den Zusatz von Alkalicarbonat oder Alkali- oder Erdalkalihydroxid alkalisch gemacht wurde. Vorzugsweise setzt man hierfür der zur Imprägnierung eingesetzten Farbstofflösung Alkalicarbonat, insbesondere Natriumcarbonat, zu. Besonders vorteilhaft ist es, den Farbstoff Phenolphthalein in einer mit Natriumcarbonat alkalisch gemachten wäßrigen Lösung einzusetzen.

Das Verfahren zur Herstellung der Adsorbenzien wird am zweckmäßigsten durchgeführt, indem man die den Farbstoff enthaltende Lösung und die Formkörper in etwa der gleichen Volumenmenge in einen Vorlagebehälter zusammengibt und bei Raumtemperatur für eine Verweilzeit von 0,5 bis 24 Stunden stehenläßt. Anschließend werden die Formkörper über ein Filter oder Sieb von der Imprägnierlösung abfiltriert, gegebenenfalls mehrfach z.B. mit Wasser gespült und anschließend bei einer Temperatur von 80 bis 200 °C im Trockenschrank getrocknet. Üblicherweise ist zur Trocknung der Adsorbenzien eine Trockenzeit von 8 bis 16 Stunden im Trockenschrank ausreichend.

In den Anwendungsbereichen, in denen aus neutralen Gasen Feuchtigkeit durch adsorptive Trocknung entfernt werden muß, z.B. bei Synthesegasen, Schutzgasen , Werksdruckluft aller Art, Förderluft, Atmungsluft von Transformatoren oder Druckluft für das Trockenhalten von Versand- oder Lagerbehältern, kann das erfindungsgemäße Verfahren zur Trocknung neutraler Gase eingesetzt werden. Neben Luft allgemein lassen sich als neutrale Gase so z.B. Erdgas, Stickstoff, Sauerstoff, Wasserstoff, Kohlendioxid sowie gasförmige Kohlenwasserstoffe wie Acetylen, Propan oder Butan und Kältemittelgase auf der Basis halogenierter Kohlenwasserstoffe mit den erfindungsgemäß verwendeten Adsorbenzien adsorptiv trocknen. Üblicherweise erfolgt die Trocknung der Gase dabei in der Weise, daß man die Adsorbenzien in an sich bekannte Adsorptionssysteme, wie sie in Laboratorien oder großtechnischen Anlagen üblich sind, z.B. Prüfröhrchen, Exsickatoren, Trockentürmen, U-Röhren, Trocknungseinsätzen in Meßinstrumenten, Transformatoren, Luftentfeuchtern oder großtechnischen Adsorber-Trocknungs-Anlagen, einfüllt und anschließend die zu trocknenden Gase über bzw. durch die Adsorbenzien leitet. Mit dem erfindungsgemäßen Verfahren kann die Qualität der Trocknung sehr gut kontrolliert werden, da durch den Farbumschlag der Zeitpunkt angezeigt wird, der eine Regeneration der Adsorbenzien erforderlich macht. Durch Erhitzen auf Temperaturen von 80 bis 200 °C werden die erfindungsgemäß verwendeten Adsorbenzien dann regeneriert, wobei sie wieder ihre ursprüngliche Färbung annehmen. Nach der Regeneration können im erfindungsgemäßen Verfahren die Adsorbenzien erneut für eine weitere adsorptive Trocknung neutraler Gase verwendet werden.

Die nachfolgenden Beispiele sollen die Erfindung weiter erläutern.

### Beispiele

### I. Herstellung der mit einem Farbstoff modifizierten Adsorbenzien

Zur Herstellung der Adsorbenzien wurden die in der nachfolgenden Tabelle 1 unter ihren Handelsnamen kommerziell erhältlichen Formkörper auf der Basis von Siliciumdioxid und Aluminiumoxid eingesetzt.

Zur Imprägnierung mit dem Farbstoff wurde eine bestimmte Volumenmenge an Formkörpern bei Raumtemperatur ist eine in einem Becherglas vorgelegte Imprägnierlösung gleicher Volumenmenge gegeben und für ca. 1 Stunde stehengelassen. Anschließend wurden die Teilchen über ein Sieb aus der Lösung abfiltriert und mit destilliertem Wasser gewaschen, bis das Filtrat farblos war. Dann wurden die so hergestellten Adsorbenzien für ca. 16 Stunden bei ca. 150 °C im Trockenschrank getrocknet. In der nachfolgenden Tabelle 1 werden die Zusammensetzungen der den Indikator-Farbstoff enthaltenen Imprägnierlösungen sowie die Färbung der hergestellten Adsorbenzien im trockenen und feuchten Zustand angegeben.

**Tabelle 1**

| **modifizierte Adsorbenzien** | | | | |
|---|---|---|---|---|
| Bsp. Nr. | Formkörper | Imprägnierlösung | Färbung | |
| | | | trocken | feucht |
| 1 | KC-Trockenperlen N^{R} ozonisiert | 0,25 Gew.-% Phenolphthalein in Ethanol | orange | farblos |
| 2 | KC-Trockenperlen N^{R} ozonisiert | 0,25 Gew.-% Phenolphthalein | orange | farblos |
| | | 1,25 Gew.-% Natriumcarbonat in Wasser | | |
| 3 | KC-Trockenperlen N^{R} ozonisiert | 0,75 Gew.-% Phenolphthalein | orange | farblos |
| | | 1,25 Gew.-% Natriumcarbonat in Wasser | | |
| 4 | KC-Trockenperlen N^{R} ozonisiert | 0,01 Gew.-% Kresolrot in Wasser | orange | farblos |
| 5 | KC-Trockenperlen N^{R} ozonisiert | 0,01 Gew.-% Thymolblau in Wasser | rosa | farblos |
| 6 | KC-Trockenperlen N^{R} ozonisiert | 0,05 Gew.-% Thymolblau | orange | blau |
| | | 0,4 Gew.-% Natriumcarbonat in Wasser | | |
| 7 | KC-Trockenperlen AF25^{R} | 0,25 Gew.-% Phenolphthalein | orange | farblos |
| | | 1,25 Gew.-% Natriumcarbonat in Wasser | | |
| 8 | KC-Trockenperlen N^{R} ozonisiert | 0,7 Gew.-% Phenolphthalein | orange | rosa |
| | | 7,0 Gew.-% Natriumcarbonat in Wasser | | |
| 9 | KC-Trockenperlen N^{R} ozonisiert | 1,1 Gew.-% Phenolphthalein | orange | violett |
| | | 11,0 Gew.-% Natriumcarbonat in Wasser | | |
| 10 | Grace Typ 175^{R} | 0,25 Gew.-% Phenolphthalein | farblos | rosa |
| | | 2,5 Gew.-% Natriumcarbonat in Wasser | | |
| 11 | KC-Trockenperlen WS^{R} | 0,25 Gew.-% Phenolphthalein | orange | weiß |
| | | 1,25 Gew.-% Natriumcarbonat in Wasser | | |

### II. Verhalten der erfindungsgemäß verwendeten Adsorbenzien bei der adsorptiven Trocknung

Zur Bestimmung des Farbumschlagpunktes und des Standzeitverhaltens der erfindungsgemäß verwendeten Adsorbenzien wurde deren Gleichgewichtsbeladung für Wasserdampf mit Luft unterschiedlichen Feuchtigkeitsgehaltes isotherm bei Raumtemperatur (25 °C) gemessen. Die Messungen hierfür wurden auf an sich bekannte Weise gemäß der Vorschrift DIN 55473 durchgeführt, indem ein definierter Luftstrom (ca. 4 dm³/min) zur Einstellung der relativen Luftfeuchte durch 6 Sättigungsflaschen, welche mit verdünnter Schwefelsäurelösung bestimmter Dichte in einer Menge von je 1 dm³ gefüllt waren, geleitet wurde. Dieser Luftstrom wurde dann durch ein Adsorptionsgefäß geleitet, welches die Adsorbenzien in einer bestimmten Menge enthielt. Dem Adsorptionsgefäß wurde periodisch eine Probe der Adsorbenzien entnommen, und aus deren Massenzunahme wurde die Adsorptionsfähigkeit für Wasserdampf ermittelt. Beispielhaft sind in der nachfolgenden Tabelle 2 die isothermen Werte für die Adsorbenzien der Beispiele Nr. 2 und Nr. 9 dargestellt, wobei deren isotherme Adsorptionsfähigkeit für Wasserdampf als relative Massenzunahme, bezogen auf die eingewogene Menge der trockenen Adsorbenzien, angegeben wird.

**Tabelle 2**

| **isotherme Adsorptionsfähigkeit der erfindungsgemäß verwendeten Adsorbenzien für Wasserdampf** | | | | | | |
|---|---|---|---|---|---|---|
| Bsp. Nr. | relative Feuchte des Luftstroms [%] | 10 | 20 | 40 | 60 | 80 |
| 2 | Gew.-% H₂O | 5,1 | 10,2 | 21,5 | 33 | 38,5 |
| 9 | Gew.-% H₂O | 3,2 | 4,9 | 8,9 | 19,5 | 34,4 |

Ein Farbumschlag der erfindungsgemäß verwendeten Adsorbenzien wurde ab einer eingestellten relativen Feuchtigkeit des Luftstroms von ca. 10 % bei Beispiel Nr. 2 und von ca. 50 % bei Beispiel Nr. 9 erreicht. Nach Trocknung im Trockenschrank bei 150 °C für eine Zeitdauer von ca. 16 Stunden nahmen die Adsorbenzien wieder die für den trockenen Zustand angegebene Färbung ein.

Zur Ermittlung der Standzeit wurden die erfindungsgemäß verwendeten Adsorbenzien wie beschrieben von Luft mit einer relativen Feuchtigkeit von > 10 % für 6 bis 8 Stunden durchströmt. Die Regeneration der Teilchen erfolgte im Trockenschrank bei 150 °C für 16 Stunden. Dieser Zyklus wurde mehrfach hintereinander wiederholt. Hierbei ergab sich, daß der Umschlagpunkt und die Beladungskapazität der erfindungsgemäß verwendeten Adsorbenzien für alle durchgeführten adsorptiven Trockenvorgänge unverändert blieb.

Diese Ergebnisse zeigen, daß die Verfärbung der erfindungsgemäß verwendeten Adsorbenzien vom feuchten in den trockenen Zustand reversibel erfolgt, was sie in hervorragender Weise für die kontrollierte adsorptive Trocknung neutraler Gase geeignet macht. Durch Trocknung im Trockenschrank können diese Adsorbenzien dabei wieder in ihre trockene Form überführt werden, wobei sie gleichzeitig wieder ihre ursprüngliche Farbe annehmen.

## Patentansprüche

1. Verfahren zur adsorptiven Trocknung neutraler Gase, **dadurch gekennzeichnet**, daß man die neutralen Gase mit partikelförmigen Adsorbenzien in Kontakt bringt, wobei die partikelförmigen Adsorbenzien mit einem Indikator-Farbstoff aus der Gruppe Phenolphthalein, Kresolrot und Thymolblau imprägnierte Formkörper auf der Basis anorganischer Oxide sind.

2. Verfahren nach Anspruch 1, **dadurch gekennzeichnet**, daß die Adsorbenzien imprägnierte Formkörper auf der Basis anorganischer Oxide aus der Gruppe Siliciumdioxid, Aluminiumoxid, Alumosilikat, Magnesiumoxid, Titandioxid, Zirkoniumoxid oder Hafniumoxid oder Gemische davon sind.

3. Verfahren nach Anspruch 1, **dadurch gekennzeichnet**, daß die imprägnierten Adsorbenzien bei Kontakt mit Wasser oder Wasserdampf einen reversiblen Farbumschlag zeigen.

4. Verwendung von partikelförmigen Adsorbenzien aus mit einem Indikator-Farbstoff aus der Gruppe Phenolphthalein, Kresolrot und Thymolblau imprägnierten Formkörpern auf der Basis anorganischer Oxide zur adsorptiven Trocknung neutraler Gase.

## Claims

1. A method for the adsorptive drying of neutral gases, characterised in that the neutral gases are brought into contact with particulate adsorbents, wherein the particulate adsorbents are moulded bodies based on inorganic oxides impregnated with an indicator dye from the group comprising phenolphthalein, cresol red and thymol blue.

2. A method according to Claim 1, characterised in that the adsorbents are impregnated moulded bodies based on inorganic oxides from the group comprising silicon dioxide, aluminium oxide, alumino-silicate, magnesium oxide, titanium dioxide, zirconium oxide or hafnium oxide or mixtures thereof.

3. A method according to Claim 1, characterised in that, on contact with water or steam, the impregnated adsorbents exhibit a reversible change in colour.

4. Use of particulate adsorbents comprising impregnated moulded bodies based on inorganic oxides impregnated with an indicator dye from the group comprising phenolphthalein, cresol red and thymol blue, for the adsorptive drying of neutral gases.

## Revendications

1. Procédé de séchage de gaz neutres par adsorption, caractérisé en ce que l'on met en contact les gaz neutres avec des adsorbants sous forme de particules, les adsorbants sous forme de particules étant des corps moulés à base d'oxydes inorganiques imprégnés d'un indicateur coloré du groupe de la phénolphtaléine, du rouge de crésol et du bleu de thymol.

2. Procédé selon la revendication 1, caractérisé en ce que les corps moulés imprégnés adsorbants, à base d'oxydes inorganiques appartiennent au groupe du dioxyde de silicium, de l'oxyde d'aluminium, des aluminosilicates, de l'oxyde de magnésium, du dioxyde de titane, de l'oxyde de zirconium, ou de l'oxyde de hafnium, et des mélanges de ceux-ci.

3. Procédé selon revendication 1, caractérisé en ce que les adsorbants imprégnés subissent un changement de couleur réversible au contact avec de l'eau ou de la vapeur d'eau.

4. Utilisation d'adsorbants sous forme de particules en corps moulés à base d'oxydes inorganiques imprégnés d'un indicateur coloré du groupe de la phénolphtaléine, du rouge de crésol et du bleu de thymol, pour le séchage des gaz neutres par adsorption.
